# EUROPÄISCHE PATENTANMELDUNG

(11) **EP 1 569 056 A2**
(43) Veröffentlichungstag der Anmeldung: **31.08.2005**
(21) Anmeldenummer: 05003956.9
(22) Anmeldetag: 23.02.2005
(51) Int. Cl.: G05B 19/042

(54) **Verfahren zum Betreiben eines Feldgerätes der Automatisierungstechnik**

(30) Priorität: 27.02.2004 DE 102004010096
(71) Anmelder: Endress + Hauser GmbH + Co. KG, 79689 Maulburg (DE)
(72) Erfinder: Griech, Reinhard, 79540 Lörrach (DE); Seiler, Christian, 79424 Auggen (DE)
(74) Vertreter: Andres, Angelika Maria

(57) **Zusammenfassung**

Bei einem Verfahren zum Betreiben eines Feldgerätes (F1..F4) der Automatisierungstechnik, das eine Recheneinheit (RE) aufweist, wird bei externen Störungen die Systemtaktrate verringert. Somit haben externe Störungen weniger Einfluss auf die Funktionsweise des Feldgeräts.

## Beschreibung

Die Erfindung betrifft ein Verfahren zum Betreiben eines Feldgerätes der Automatisierungstechnik gemäß dem Oberbegriff des Anspruchs 1.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, wie z. B. Ventile die den Durchfluss einer Flüssigkeit in einem Rohrleitungsabschnitt oder Pumpen die den Füllstand in einem Behälter beeinflussen.

Eine Vielzahl solcher Feldgeräte wird von der Firma Endress + Hauser hergestellt und vertrieben.

In der Regel sind Feldgeräte in modernen Fabrikationsanlagen über Feldbussysteme (Profibus®, Foundation®Fieldbus, etc.) mit übergeordneten Einheiten, z. Bsp. Leitsystemen oder Steuereinheiten verbunden. Diese dienen zur Prozesssteuerung, Prozessvisualisierung, Prozessüberwachung sowie zur Inbetriebnahme der Feldgeräte.

Meist sind Feldbussysteme auch in Unternehmensnetzwerke integriert. Damit kann aus unterschiedlichen Bereichen eines Unternehmens auf Prozess- bzw. Feldgerätedaten zugegriffen werden.

Zur weltweiten Kommunikation können Firmennetzwerke auch mit öffentlichen Netzwerken, z.B. dem Internet, verbunden sein.

Die einwandfreie Funktion der Feldgeräte bzw. aller an ein Feldbussystem angeschlossenen Einheiten ist von entscheidender Bedeutung für den reibungslosen und sicheren Prozessablauf in einem Unternehmen. Störungen im Prozessablauf aufgrund von Fehlfunktionen einzelner Feldgeräte können erhebliche Kosten verursachen.

Um die vielfältigen Aufgaben, die an ein modernes Feldgerät gestellt werden, zu lösen, sind leistungsfähige Soft- und Hardwarekomponenten notwendig. Man bezeichnet Feldgeräte deshalb auch als "Embedded Systems", d. h. speziell an bestimmte Aufgaben angepasste Rechnersysteme, die in den Produkten eingesetzt werden, wo die zu lösenden Aufgaben anfallen. Häufig werden Embedded Systems an ihren Leistungsgrenzen betrieben, um den wachsenden Anforderungen gerecht zu werden. Mikroprozessoren und Speicherbausteine arbeiten deshalb mit möglichst hohen Taktraten teilweise sogar mit der maximal möglichen Taktrate.

Allgemein ist zu beobachten, dass immer mehr Funktionalitäten und Aufgaben von der Leitebene in die Feldgeräte verlagert wird. Aufgrund der damit verbundenen stetig wachsenden Komplexität werden Feldgeräte auch immer anfälliger gegenüber äußeren Störeinflüssen.

An ihrem Einsatzort sind Feldgeräte häufig unterschiedlichen äußeren Störungen wie z. B. starke Wärmeeinwirkung oder elektromagnetischer Strahlung ausgesetzt. Auch können in der Nähe von Feldgeräten Schaltimpulse z. B. von in der Nähe eingesetzten Elektromotoren auftreten. Diese Störeinflüsse können u. a. zu Fehlfunktionen der Feldgeräte führen.

Die Anfälligkeit von Feldgeräten auf solche Störeinflüsse hängt von verschiedenen Faktoren ab. Zum einen sind es die bei der Herstellung der Feldgeräte verwendeten elektronischen Bauteile, die unterschiedlich auf die oben erwähnten Störeinflüsse reagieren. Zum anderen ist es der gesamte Aufbau der Elektronik im Feldgerät. Auch die Architektur der eingesetzten Mikroprozessoren ist von entscheidender Bedeutung.
Insbesondere die Kommunikation zwischen den einzelnen Bauteilen (Mikroprozessor, Speicher, etc.) ist sehr empfindlich gegenüber externe Störungen.

Die Hersteller von Feldgeräten müssen die einwandfreie Funktion ihrer Produkte garantieren können.
In der Regel werden Feldgeräte deshalb vor der Serienfreigabe intensiven Tests unterzogen. Bei diesen Tests werden u. a. die Grenzen des zulässigen Temperaturbereichs für den jeweiligen Typ eines Feldgerätes bestimmt. Innerhalb dieses Temperaturbereichs garantiert der Hersteller die einwandfreie Funktion der Feldgeräte. Dieser Temperaturbereich wird auch in den zu den Feldgeräten gehörenden Datenblättern angegeben.

Treten beim Anwender Anwendungen auf, bei denen die Grenzen des vom Hersteller angegebenen Temperaturbereichs, wenn auch nur kurzfristig, überschritten werden, so ist es im Allgemeinen schwierig ein geeignetes Feldgerät zu finden.
Häufig sind aufwendige Umbaumaßnahmen notwendig, um den Einsatzbereich eines Feldgerätes zu erweitern. Teilweise ist eine Anpassung auch prinzipiell nicht möglich.

Aufgabe der Erfindung ist es ein Verfahren zum Betreiben eines Feldgerätes anzugeben, mit dem der Einsatzbereich des Feldgerätes einfach und kostengünstig erweiterbar ist.

Gelöst wird diese Aufgabe durch das im Anspruch 1 angegebene Verfahren.

Vorteilhafte Weiterentwicklungen der Erfindung sind in den Unteransprüchen angegeben.

Die wesentliche Idee der Erfindung besteht darin, beim Auftreten von externen Störeinflüssen, die Systemtaktrate zu verringern, um das gesamte System wenige empfindlich auf externe Störeinflüsse zu machen. Zeitkritische Verbindungen beim Datenaustausch zwischen den einzelnen Bauteilen werden durch den langsameren Systemtakt weniger störempfindlich.

In einer Weiterentwicklung der Erfindung wird auch die Taktrate des Mikroprozessors verringert.
Die Rechenleistung des Feldgerätes wird dadurch zwar heruntergefahren, sie ist aber in den meisten Fällen noch ausreichend um die wesentlichen Systemaufgaben erfüllen zu können.

Sinnvollerweise wird die Systemtaktrate stufenweise verringert. Bei einer nur geringfügigen Überschreitung des Temperaturbereichs ist eine entsprechend kleine Verringerung des Systemtakts ausreichend.

Zur Erfassung von externen Störungen dienen entsprechende Sensoren.

Die Wärmeeinwirkung kann mit einem Temperatursensor erfasst werden.

Die elektromagnetische Strahlungseinwirkung wird indirekt mit einem oder mehreren speziellen Software-Modulen erfasst.

Die äußeren Störeinflüsse können auch durch die Korrelation von Fehlermeldungen einzelner Module ermittelt werden.

Sicherheitshalber wird an das Leitsystem eine Fehlermeldung gesendet, wenn externe Störungen auftreten, die eine Verringerung der Taktrate notwendig machen.

Werden die auftretenden Störungen gemeinsam erfasst und abgespeichert, so kann aus der Korrelation der Störungen eine quantitative Aussage über die Störbelastung gemacht werden.
Ein wesentlicher Vorteil des erfindungsgemäßen Verfahrens ist darin zu sehen, dass der Störeinfluss direkt im Feldgerät bestimmt wird und das Feldgerät so als Indikator für externe Störeinflüsse dienen kann. Insbesondere kann ein Anlagenbetreiber dadurch gezielte Gegenmaßnahmen (Wärmeabschirmungen, Strahlungsabschirmungen etc.) im Hinblick auf Störungen ergreifen.

Nachfolgend ist die Erfindung anhand eines in der Zeichnung dargestellten Ausführungsbeispiels näher erläutert.

Es zeigen:
- Fig. 1: Netzwerk der Prozessautomatisierungstechnik mit mehreren Feldgeräten in schematischer Darstellung;
- Fig. 2: Blockschaltbild eines Feldgerätes.

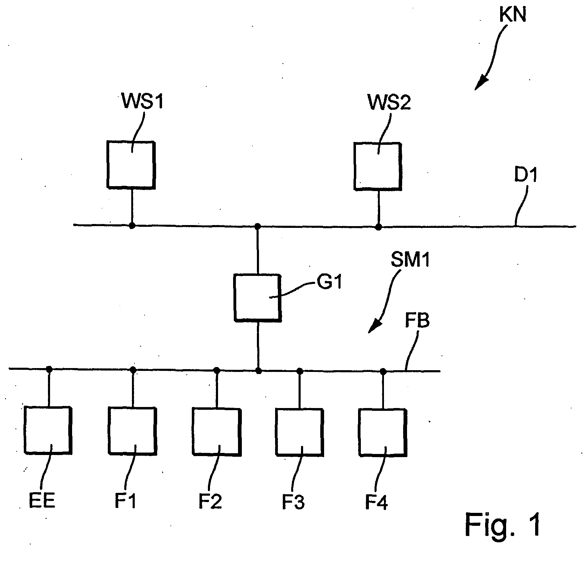

In Fig. 1 ist ein Netzwerk der Automatisierungstechnik näher dargestellt. An einen Datenbus D1 sind mehrere Rechnereinheiten (Workstations) WS1, WS2 angeschlossen. Diese Rechnereinheiten dienen als übergeordnete Einheiten (Leitsystem bzw. Steuereinheit) zur Prozessvisualisierung, Prozessüberwachung und zum Engineering sowie zum Bedienen und Überwachen von Feldgeräten. Der Datenbus D1 arbeitet z. B. nach dem Profibus® DP-Standard oder nach dem HSE (High Speed Ethernet)-Standard der Foundation® Fieldbus. Über ein Gateway 1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus, Foundation Fieldbus oder HART.

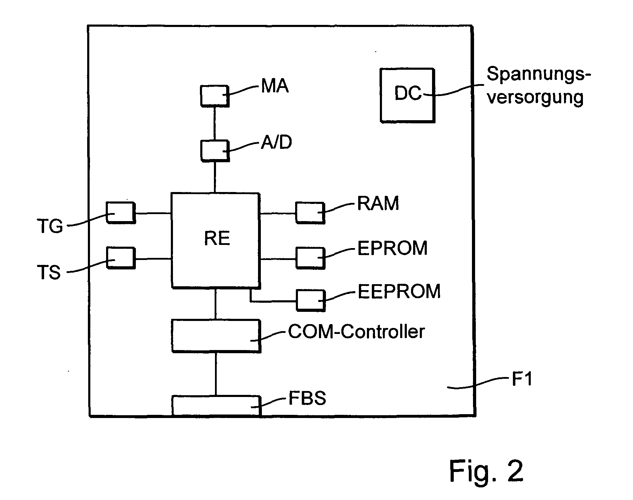

In Fig. 2 ist ein Blockschaltbild eines Feldgerätes z. B. F1 näher dargestellt. Eine Recheneinheit RE (µC/CPU) ist zur Messwerterfassung über einen Analog/Digital-Wandler A/D mit einem Messwertaufnehmer MA verbunden, der die Prozessvariable (Druck, Durchfluss oder Füllstand etc.) erfasst.
Die Recheneinheit RE ist mit mehreren Speicherelementen verbunden, ein RAM-Speicher dient als temporäre Speicher, ein EPROM-Speicher als Speicher für das in der Recheneinheit auszuführende Anwendungsprogramm und ein
EEPROM-Speicher als Speicher für Kalibrierdaten und Start-Parameterwerte insbesondere für das Setup-Programm der Recheneinheit RE.

Weiterhin ist die Recheneinheit RE mit einem Taktgenerator TG verbunden, der die Zeitbasis für den Systemtakt liefert.
Zur Kommunikation mit dem Feldbussegment SM1 ist die Recheneinheit RE über einen Kommunikations-Controller COM mit einer Feldbusschnittstelle FBS verbunden.

Zur Erfassung der Umgebungstemperatur dient ein Temperatursensor TS, der ebenfalls mit der Recheneinheit RE verbunden ist.

Eine Spannungsversorgungseinheit DC liefert die notwendige Energie für das Feldgerät F1. Die Versorgungsleitungen zu den einzelnen Bauteilen sind der Übersichtlichkeit nicht eingezeichnet.

Nachfolgend ist das erfindungsgemäße Verfahren näher erläutert.

Treten externe Störeinflüsse auf, so wird die Systemtaktrate im Feldgerät F1 verringert. Dadurch werden vor allem die Speicherzugriffszeiten verlängert. Das Timing bei Speicherzugriffen ist extrem kritisch auf externe Störeinflüsse und kann leicht zu Fehlern führen insbesondere wenn Rechnersysteme an ihren Leistungsgrenzen betrieben werden.

In einem weiteren Verfahrensschritt wird die Taktrate der Recheneinheit RE verringert.

Durch die geringere Taktrate wird die Verarbeitungsgeschwindigkeit der Recheneinheit RE kleiner und die Ansprechzeit für Systemfunktionen langsamer. In der Regel hat die keinen großen Einfluss auf die Funktion des Feldgeräts insbesondere auf die zu lösende Messaufgabe.

Vielfach ist es nur notwendig die Taktrate(n) zu reduzieren, wenn die Temperatur in der Umgebung der Recheneinheit RE einen gewissen Grenzwert übersteigt.

Diese Temperatur wird mit Hilfe des Temperatursensors TS erfasst.

Es ist vorteilhaft die Systemtaktrate nur stufenweise zu verringern.

Der Störeinfluss durch elektromagnetische Strahlung wird mit einem separaten Programm-Modul, das in der Recheneinheit RE abläuft ermittelt. Das Programm-Modul dient nur dazu, Fehlfunktionen aufgrund von externen Störungen zu ermitteln.

Es können aber auch mehrere Programm-Module zur Ermittlung von Störungen verwendet werden.
Aus der Korrelation der auftretenden Fehler in den einzelnen Modulen kann die Störung quantitativ erfasst werden.

## Patentansprüche

1. Verfahren zum Betreiben eines Feldgerätes der Automatisierungstechnik, das ein Recheneinheit RE aufweist, die mit mehreren Bauelementen verbunden ist, die über einen Systemtakt gesteuert werden, **dadurch gekennzeichnet, dass** bei externen Störungen die Systemtaktrate verringert wird.

2. Verfahren nach Anspruch 1, **dadurch gekennzeichnet, dass** die Taktrate für die Recheneinheit RE verringert wird.

3. Verfahren nach einem der vorhergehenden Ansprüche, **dadurch gekennzeichnet, dass** eine externe Störung ein Temperaturanstieg in der Umgebung der Recheneinheit RE über eine Grenztemperatur ist.

4. Verfahren nach einem der vorhergehenden Ansprüche, **dadurch gekennzeichnet, dass** eine externe Störung elektromagnetische Strahlung ist.

5. Verfahren nach einem der vorhergehenden Ansprüche, **dadurch gekennzeichnet, dass** beim Auftreten von externer Störungen die Systemtaktrate stufenweise verringert wird.

6. Verfahren nach einem der vorhergehenden Ansprüche, **dadurch gekennzeichnet, dass** die Temperatur in der Umgebung der Recheneinheit RE mit einem Temperatursensor TS erfasst werden.

7. Verfahren nach einem der vorhergehenden Ansprüche, **dadurch gekennzeichnet, dass** der Störeinfluss durch elektromagnetische Strahlung mit einem separaten Modul gemessen wird.

8. Verfahren nach einem der vorhergehenden Ansprüche, **dadurch gekennzeichnet, dass** der Störeinfluss durch elektromagnetischer Strahlung über die Korrelation von Fehlermeldungen einzelner Module erfasst wird.

9. Verfahren nach einem der vorhergehenden Ansprüche, **dadurch gekennzeichnet, dass** beim Ändern der Taktrate eine Meldung an ein Leitsystem WS1, WS2 übermittelt wird.
